# EUROPÄISCHE PATENTSCHRIFT

(11) **EP 0 777 361 B1**
(45) Veröffentlichungstag und Bekanntmachung des Hinweises auf die Patenterteilung: **26.12.2007**
(21) Anmeldenummer: 96118288.8
(22) Anmeldetag: 14.11.1996
(51) Int. Cl.: H04L 12/56, H04Q 11/04

(54) **Vorrichtung und Verfahren zur Kommunikation zwischen Sende- und/oder Empfangsstationen und einer Vermittlungsstation**
Device and method for communication between transmitting and/or receiving stations and a switching station
Dispositif et méthode pour la communication entre des postes émetteurs et/ou récepteurs et un central de commutation

(30) Priorität: 01.12.1995 DE 19544976
(43) Veröffentlichungstag der Anmeldung: 04.06.1997
(73) Patentinhaber: Infineon Technologies AG, 81669 München (DE)
(72) Erfinder: Foglar, Andreas, 81245 München (DE)
(74) Vertreter: Jannig, Peter

(56) Entgegenhaltungen:
- EP-A- 0 385 431
- EP-A- 0 499 150
- KOWALK W ET AL: "THE "POLICING FUNCTION" TO CONTROL USER ACCESS IN ATM NETWORKS DEFINITION AND IMPLEMENTATION" PROCEEDINGS OF THE INTERNATIONAL SYMPOSIUM ON SUBSCRIBER LOOPS AND SERVICES. (ISSLS), BOSTON, SEPT. 11 - 16, 1988, Nr. SYMP. 8, 11. September 1988, Seiten 240-245, XP000574858 INSTITUTE OF ELECTRICAL AND ELECTRONICS ENGINEERS

## Beschreibung

Die vorliegende Erfindung betrifft eine Vorrichtung und ein Verfahren zur Kommunikation zwischen Sende- und/oder Empfangsstationen und einer Vermittlungsstation gemäß den Oberbegriffen der Patentansprüche 1 und 11.

Vorrichtungen und Verfahren zur Kommunikation zwischen Sende- und/oder Empfangsstationen und einer Vermittlungsstation sind bekannt und werden nachfolgend beispielhaft anhand des ATM-Vermittlungsverfahrens kurz erläutert.

Das CCITT (Consultative Committee for International Telephony and Telegraphy) hat das Vermittlungsverfahren ATM (Asynchronous Transfer Mode) bereits im Mai 1990 zum Standard für die sogenannte Datenpaket-Vermittlung von B-ISDN ausgerufen. ATM wurde hierbei wie folgt definiert: "Ein Vermittlungsverfahren, bei dem die Information in Zellen gebündelt ist; das Verfahren ist insofern asynchron, als die Zellen nicht notwendigerweise periodisch zwischen Sender und Empfänger ausgetauscht werden".

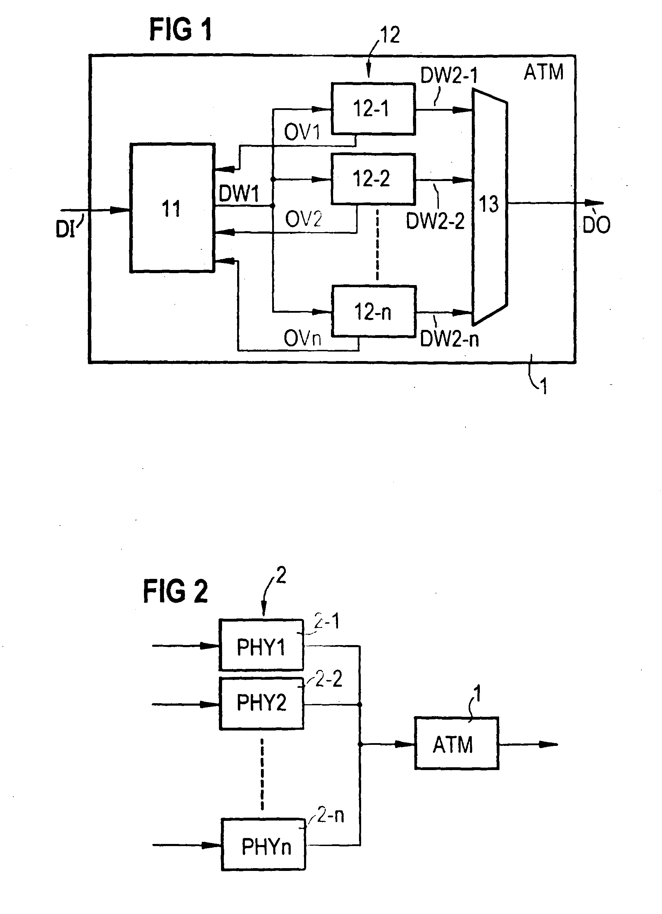

Eine mögliche Realisierungsform zur Durchführung des ATM-Verfahrens ist schematisch in Figur 2 gezeigt.

Gemäß Figur 2 sind eine Vermittlungsstation 1 in Form einer sogenannten ATM-Layer-Schaltung und mehrere Sendestationen 2-1, 2-2, ..., 2-n in Form sogenannter PHY-Layer-Schaltungen vorgesehen.

Die mehreren Sendestationen 2-1, 2-2, ..., 2-n sind mit der einen Vermittlungsstation 1 verbunden und übertragen an dieselbe asynchron Datenpakete (Zellen), die zur Weiterleitung bzw. Vermittlung an in der Figur nicht gezeigte Empfangsstationen vorgesehen sind.

Die Vermittlungsstation weist einen maximalen Datendurchsatz auf, der nicht überschritten werden kann. Folglich sind die Sendestationen grundsätzlich so auszulegen bzw. nur so viele Sendestationen mit einer Vermittlungsstation zu verschalten, daß die Summe der pro Zeiteinheit zur Vermittlungsstation übertragenen Datenmengen den maximalen Datendurchsatz der Vermittlungsstation nicht übersteigt.

Bei manchen Sendestationen kann die pro Zeiteinheit zur Vermittlungsstation zu übertragende Datenmenge jedoch stark variieren, beispielsweise wenn es sich bei der Sendestation um ein Terminal oder dergleichen handelt bzw. wenn die Sendestation mit einer derartigen Einrichtung verbunden ist.

Legt man in einem solchen Fall dem Aufbau und/oder der Einstellung der Anlage jeweils die maximal mögliche Datenmenge zugrunde, die im Extremfall von der jeweiligen Sendestation zur Vermittlungsstation übertragen werden kann, so ist die Vermittlungsstation in der Regel nur äußerst selten angemessen ausgelastet; sie wird vielmehr in den meisten Fällen weit unter ihrer Leistungsgrenze betrieben werden. Die Anschaffung und der Betrieb einer derartigen Anlage wären daher relativ teuer.

Legt man dem Aufbau und/oder der Einstellung der Anlage zur Erhöhung der Wirtschaftlichkeit andererseits nicht die von der jeweiligen Sendestation zur Vermittlungsstation maximal übertragbare Datenmenge, sondern nur eine geringere Datenmenge wie beispielsweise die durchschnittlich zu übertragende Datenmenge zugrunde, so kann es passieren, daß der Vermittlungsstation pro Zeiteinheit mehr Daten zugeführt werden als diese weiterleiten kann. Dies hätte zur Folge, daß der Vermittlungsstation zugeführte Daten verloren gehen können. Der Betrieb einer derart ausgebildeten Anlage wäre daher unter Umständen mit einem nicht unerheblichen Sicherheitsrisiko behaftet.

Keine der genannten Möglichkeiten ist zufriedenstellend

Eine weitere Vorrichtung und ein weiteres Verfahren zur Kommunikation zwischen Sende- und/oder Empfangsstationen und einer Vermittlungsstation sind aus der EP-A-0 499 150 bekannt. Die Vorrichtung und das Verfahren, die in diesem Dokument beschrieben sind, sind eine Vorrichtung gemäß dem Oberbegriff des Patentanspruchs 1 und ein Verfahren gemäß dem Oberbegriff des Patentanspruchs 11. Auch diesem Dokument ist jedoch keine zufriedenstellende Lösung der vorstehend angesprochenen Probleme entnehmbar.

Der vorliegenden Erfindung liegt daher die Aufgabe zugrunde, die Vorrichtung gemäß dem Oberbegriff des Patentanspruchs 1 und das Verfahren gemäß dem Oberbegriff des Patentanspruchs 11 derart weiterzubilden, daß in der Vermittlungsstation ein dauerhaft hoher tatsächlicher Datendurchsatz erzielbar ist, wobei Sicherheitsrisiken infolge von Überlastungen der Vermittlungsstation ausschließbar sind.

Diese Aufgabe wird erfindungsgemäß durch die in den kennzeichnenden Teilen der Patentansprüche 1 und 11 beanspruchten Merkmale gelöst.

Durch das Vorsehen dieser Maßnahmen kann eine drohende Überlastung der Vermittlungsstation frühzeitig erkannt und daraufhin die Übernahme von Daten aus ausgewählten Sendestationen in die Vermittlungsstation gezielt unterbrochen werden.

Das gezielte Unterbrechen der Datenübernahme ermöglicht es, die Unterbrechung auf eine minimale Anzahl von Sendestationen und/oder auf solche Sendestationen zu beschränken, deren Ausfall die geringsten negativen Auswirkungen hat.

Im Gegensatz zu den herkömmlichen Vermittlungsverfahren sind damit von einer Überlastung bzw. drohenden Überlastung der Vermittlungsstation (im folgenden der Einfachheit halber als kritischer Zustand bezeichnet) nicht jeweils alle Sendestationen (der bislang in solchen Situationen erfolgende Überlauf des Eingangspuffers der Vermittlungsstation wirkte sich üblicherweise auf die Daten aller Sendestationen aus), sondern nur einzelne oder einige wenige Sendestationen betroffen (weil ein Überlauf des Eingangspuffers der Vermittlungsstation bei einer rechtzeitigen selektiven Unterbrechung der Datenzufuhr zur Vermittlungsstation nicht mehr auftreten kann). Aufgrund der Kenntnis der von der Unterbrechung betroffenen Sendestation(en) können die während des kritischen Zustandes gegebenenfalls auftretenden Datenverluste bei der Weiterverarbeitung der Daten angemessen berücksichtigt werden und/oder bei einer Normalisierung des Zustandes schnell und einfach durch einen erneuten Übertragungsversuch eliminiert werden.

Die kontinuierliche Ermittlung der pro Zeiteinheit in die Vermittlungsstation übernommenen Datenmengen ermöglicht es, die genannte Unterbrechung im Ansprechen auf einen entsprechend starken Rückgang der Datenflut sofort zu beenden und die vernachlässigte(n) Sendestation(en) wieder normal zu berücksichtigen.

Durch Vorsehen eines derartigen Sicherungsmechanismus gegen eine Überlastung der Vermittlungsstation müssen der Aufbau und/oder die Einstellung der Anordnung nicht an der pro Zeiteinheit jeweils maximal übertragbaren Datenmenge ausgerichtet sein; es kann vielmehr von durchschnittlichen Verhältnissen ausgegangen werden, wodurch sich eine wesentlich bessere Auslastung der Vermittlungsstation erzielen läßt.

Es wurden damit eine Vorrichtung bzw. ein Verfahren geschaffen, mittels welcher in der Vermittlungsstation ein dauerhaft hoher tatsächlicher Datendurchsatz erzielbar ist, wobei Sicherheitsrisiken infolge von Überlastungen der Vermittlungsstation ausschließbar sind.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
Figur 1 eine schematische Darstellung des Aufbaus eines die erfindungsgemäße Vorrichtung enthaltenden ATM-Vermittlungssystems, und
Figur 2 eine schematische Darstellung des Aufbaus eines herkömmlichen ATM-Vermittlungssystems.

Wie das vorstehend bereits beschriebene herkömmliche System gemäß Figur 2 betrifft auch das in der Figur 1 gezeigte System eine Vorrichtung zur Durchführung des ATM-Vermittlungsverfahrens.

In Übereinstimmung mit Figur 2 sind bei dem in Figur 1 veranschaulichten System eine Vielzahl von (in der Figur nicht gezeigten) Sendestationen in Form von PHY-Layer-Schaltungen vorgesehen. Jede dieser Sendestationen ist über eine separate Datenübertragungsleitung mit einer gemeinsamen Vermittlungsstation 1 in Form einer ATM-Layer-Schaltung verbunden. In Figur 1 ist stellvertretend für die Vielzahl der genannten Datenübertragungsleitungen nur eine einzelne Datenübertragungsleitung DI dargestellt.

Die Vermittlungsstation 1 beinhaltet eine Abfragevorrichtung 11, eine Ermittlungsvorrichtung 12 und einen Multiplexer 13.

Die Abfragevorrichtung 11 ist über die Vielzahl von Datenübertragungsleitungen DI mit den Sendestationen und ferner mit der Ermittlungsvorrichtung 12 verbunden.

Aufgabe der Abfragevorrichtung 11 ist es, die mit dieser über die Datenübertragungsleitungen DI verbundenen Sendestationen zyklisch oder in einer beliebigen anderen Reihenfolge abzufragen und sie bei Bedarf zur Versendung von durch die Vermittlungsstation 1 zu vermittelnden Datenpaketen (Zellen) zur Vermittlungsstation zu veranlassen. Während der Übertragung eines Datenpakets von einer der Sendestationen zur Vermittlungsstation und/oder der Übernahme desselben in die Vermittlungsstation, genauer gesagt in die Abfragevorrichtung 11, setzt die Abfragevorrichtung 11 die Abtastung der Sendestationen bzw. der Datenübertragungsleitungen DI fort, um danach von den Sendestationen zu übertragende und/oder in die Vermittlungsstation zu übernehmende Datenpakete zu ermitteln.

Die von den Sendestationen versandten und von der Abfragevorrichtung 11 übernommenen Datenpakete werden von letzterer zur Ermittlungsvorrichtung 12 weitergeleitet.

Die Ermittlungsvorrichtung 12 setzt sich aus einer der Anzahl der Sendestationen entsprechenden Vielzahl von Sub-Ermittlungsvorrichtungen 12-1, 12-2, ..., 12-n zusammen.

Jede Sub-Ermittlungsvorrichtung 12-1, 12-2, ..., 12-n ist einer bestimmten Sendestation (welche sich bei Bedarf auch aus einer Gruppe von Sub-Sendestationen zusammensetzen kann) zugeordnet.

Aufgabe jeder Sub-Ermittlungsvorrichtung 12-1, 12-2, ..., 12-n ist es, die Datenmenge zu ermitteln, die die Vermittlungstation 1 von der der jeweiligen Sub-Ermittlungsvorrichtung zugeordneten Sendestation pro Zeiteinheit übernommen hat und/oder zu übernehmen ist.

Aufgabe der Ermittlungsvorrichtung bzw. der Sub-Ermittlungsvorrichtungen 12-1, 12-2, ..., 12-n ist es ferner, die Abfragevorrichtung 11 bei Bedarf dazu zu veranlassen, daß selektiv eine oder mehrere der Sendestationen bei der Abfrage auszulassen sind, wodurch eine Datenübertragung von der betreffenden Sendestation zur Vermittlungsstation unterbunden wird und wodurch die Ermittlungseinrichtung im Zusammenwirken mit der Abfragevorrichtung als eine (Datenübernahme-)Unterbrechungsvorrichtung wirkt. Die auslösenden Ereignisse zur beschriebenen Einflußnahme auf die Abfragevorrichtung und mögliche Varianten der Art der Einflußnahme werden später detailliert erläutert.

Jede der Sub-Ermittlungsvorrichtungen 12-1, 12-2, ... 12-n ist zu den genannten Zwecken über Datenübertragungsleitungen DW1 und Steuerleitungen OV1, OV2, ..., OVn mit der Abfragevorrichtung 11 verbunden, wobei sowohl die Datenübertragungsleitungen DW1 als auch die Steuerleitungen OV1, OV2, ... OVn als separate Leitungen oder als Busleitung ausgebildet sein können.

Über die Datenübertragungsleitungen DW1 erhalten die Sub-Ermittlungsvorrichtungen 12-1, 12-2, ..., 12-n die von der Abfragevorrichtung übernommenen Datenpakete übermittelt, und zwar derart, daß einer jeweiligen Sub-Ermittlungsvorrichtung nur solche Datenpakete zugeführt werden, die von der jeweils zugeordneten Sendestation stammen.

Über die Steuerleitungen OV1, OV2, ..., OVn erhält die Abfragevorrichtung 11 von den jeweiligen Sub-Ermittlungsvorrichtungen 12-1, 12-2, ..., 12-n unter anderem die Information, ob und gegebenenfalls welche der Sendestationen von der Abfragevorrichtung 11 unberücksichtigt zu lassen sind (die Ermittlungsvorrichtung hat die Master-Funktion inne). In Abhängigkeit von den diese Maßnahme (Nicht-Berücksichtigung von Sendestationen) auslösenden Ereignissen und der Art der Reaktion auf derartige Ereignisse können auch andere Informationen über die Steuerleitungen OV1, OV2, ..., OVn übertragen werden, und zwar bei Bedarf auch bidirektional.

Die Sub-Ermittlungsvorrichtungen 12-1, 12-2, ..., 12-n sind ferner über Datenübertragungsleitungen DW2-1, DW2-2, ..., DW2-n mit dem Multiplexer 13 verbunden.

Über diese Datenübertragungsleitungen DW2-1, DW2-2, ..., DW2-n leiten die Sub-Ermittlungsvorrichtungen 12-1, 12-2, ..., 12-n die ihnen zugeführten Datenpakete zum Multiplexer 13 weiter.

Der Multiplexer gibt die Datenpakete in einer vorbestimmten Reihenfolge über Datenübertragungsleitungen DO aus der Vermittlungsstation aus.

Die beschriebene Vermittlungsstation kann aufgrund des beschriebenen Zusammenwirkens von Ermittlungsvorrichtung 12 und Abfragevorrichtung 11 stets sicher, d.h. ohne in der Vermittlungsstation auftretende Überlastung betrieben werden.

Das beschriebene Nicht-Berücksichtigen bzw. Übergehen einer oder mehrerer Sendestationen durch die Abfragevorrichtung kann entsprechend den jeweiligen Bedürfnissen durch unterschiedlichste Ereignisse ausgelöst werden.

Ein mögliches auslösendes Ereignis (erstes auslösendes Ereignis) besteht darin, daß eine beliebige der Sub-Ermittlungsvorrichtungen 12-1, 12-2, ..., 12-n ermittelt, daß ein ihr (vorzugsweise individuell) zugewiesener Grenzwert durch die von der zugeordneten Sendestation pro Zeiteinheit übernommene und/oder zu übernehmende Datenmenge überschritten ist oder im Begriff ist, überschritten zu werden, oder überschritten zu werden droht.

Die Festlegung der Grenzwerte für die den jeweiligen Sub-Ermittlungsvorrichtungen zugeordneten Sendestationen kann entsprechend den jeweiligen individuellen Bedürfnissen erfolgen.

Die Grenzwerte werden in der Regel jeweils zwischen der von der jeweiligen Sendestation durchschnittlich pro Zeiteinheit zu übertragenden Datenmenge und der maximal pro Zeiteinheit übertragbaren Datenmenge liegen.

Die Grenzwerte und die Anzahl der an die Vermittlungsstation angeschlossenen Sendestationen werden zweckmäßiger Weise so gewählt, daß die Summe der Grenzwerte für alle Sendestationen im wesentlichen dem maximalen Datendurchsatz der Vermittlungsstation entspricht oder darunter liegt. Sofern einer oder mehrere der Grenzwerte weit über der bei den betreffenden Sendestationen pro Zeiteinheit durchschnittlich zu erwartenden Datenmenge liegt, kann die Summe der Grenzwerte für alle Sendestationen jedoch auch über dem maximalen Datendurchsatz der Vermittlungsstation liegen.

Die Zuweisung der Grenzwerte an die einzelnen Sendestationen kann auch nach Prioritäten erfolgen, wobei derjenigen Sendestation, deren Daten von hoher Bedeutung sind, ein relativ gesehen näher an der maximal pro Zeiteinheit übertragbaren Datenmenge liegender Grenzwert zugewiesen wird als denjenigen Sendestationen, deren Daten von untergeordneter Bedeutung sind.

Alternativ oder zusätzlich zum zuvor erläuterten ersten auslösenden Ereignis kann ein mögliches weiteres auslösendes Ereignis auch darin bestehen, daß unabhängig vom ersten auslösenden Ereignis oder gleichzeitig damit ein Grenzwert, der beispielsweise der von der Vermittlungsstation pro Zeiteinheit vermittelbaren Gesamt-Datenmenge entsprechen kann, in Begriff ist, überschritten zu werden oder überschritten zu werden droht.

Ähnlich variabel wie das ein Übergehen einer Sendestation auslösende Ereignis ist auch die Festlegung der Sendestation oder der Sendestationen, die bei Auftreten eines solchen Ereignisses zu übergehen sind.

Die zu übergehende Sendestation ist im einfachsten Fall diejenige Station, deren zugeordnete Sub-Ermittlungsvorrichtung das Vorliegen eines auslösenden Ereignisses ermittelt hat.

Statt dessen kann die zu übergehende Station aber auch entsprechend festgelegter oder veränderbarer Prioritäten bestimmt werden, wobei diejenige(n) Sendestation(en), deren Daten von vergleichsweise geringer Bedeutung sind, als erste übergangen wird (werden).

Die Anzahl der zu übergehenden Sendestationen kann auch davon abhängig gemacht werden, in welchem Umfang der jeweils verwendete Grenzwert überschritten wird oder überschritten zu werden droht.

Das beschriebene erfindungsgemäße Vorsehen und Zusammenwirken von Abfragevorrichtung und Ermittlungsvorrichtung ermöglicht auf einfache Weise die Schaffung eines individuell konfigurierbaren Kommunikationssystems, dessen Betrieb gleichermaßen wirtschaftlich und sicher ist.

## Patentansprüche

1. Vorrichtung zur Kommunikation zwischen Sende- und/oder Empfangsstationen und einer Vermittlungsstation (1),
- wobei die Sendestationen (2-1, 2-2, ..., 2-n) der Vermittlungsstation (1) zur Weiterleitung an Empfangsstationen vorgesehene Daten zuführen,
- wobei die Vermittlungsstation (1) die ihr zugeführten Daten übernimmt und direkt oder indirekt an die jeweils gewünschte Empfangsstation weiterleitet, und
- wobei die Vermittlungsstation (1)
- eine Ermittlungsvorrichtung (12), mittels der eine pro Zeiteinheit in die Vermittlungsstation (1) übernommene und/oder zu übernehmende Datenmenge ermittelbar ist, und
- eine Unterbrechungsvorrichtung (11, 12), mittels der die Übernahme von Daten von einer oder mehreren Sendestationen (2-1, 2-2, ..., 2-n) in die Vermittlungsstation (1) in Abhängigkeit vom Ermittlungsergebnis selektiv unterbrechbar ist,
enthält,
**dadurch gekennzeichnet,**
**daß** die Unterbrechungsvorrichtung (11, 12) eine Abfragevorrichtung (11) enthält,
- die die Sendestationen (2-1, 2-2, ..., 2-n) zyklisch oder in einer beliebigen anderen Reihenfolge abfragt und sie bei Bedarf zur Ausgabe von durch die Vermittlungsstation (1) zu vermittelnden Daten veranlaßt,und
- die dann, wenn die von einer, mehreren oder allen Sendestationen (2-1, 2-2, ..., 2-n) pro Zeiteinheit ausgegebene Datenmenge einen bestimmten Grenzwert überschreitet, eine oder mehrere Sendestationen (2-1, 2-2, ..., 2-n) bei der Abfrage unberücksichtigt läßt.

2. Vorrichtung nach Anspruch 1,
**dadurch gekennzeichnet,**
**daß** die Kommunikation in einer asynchronen Datenpaketversendung von den Sendestationen (2-1, 2-2, ..., 2-n) zur Vermittlungsstation (1) besteht.

3. Vorrichtung nach Anspruch 1 oder 2,
**dadurch gekennzeichnet,**
**daß** die Vermittlungsstation (1) zur Durchführung eines ATM-Vermittlungsverfahrens ausgelegt ist.

4. Vorrichtung nach einem der vorhergehenden Ansprüche,
**dadurch gekennzeichnet,**
**daß** die Ermittlungsvorrichtung (12) eine Vielzahl von Sub-Ermittlungsvorrichtungen (12-1, 12-2, ..., 12-n) aufweist, von denen jede einer Sendestation 2-1, 2-2, ..., 2-n) zugeordnet ist, und welche die von der zugeordneten Sendestation pro Zeiteinheit übernommene und/oder zu übernehmende Datenmenge jeweils separat ermitteln.

5. Vorrichtung nach Anspruch 4,
**dadurch gekennzeichnet,**
**daß** die Ermittlungsvorrichtung (12) dazu ausgelegt ist, die ermittelten Datenmengen jeweils mit einem für die betreffende Sendestation (2-1, 2-2, ..., 2-n) festgelegten Grenzwert zu vergleichen.

6. Vorrichtung nach Anspruch 4 oder 5,
**dadurch gekennzeichnet,**
**daß** die Ermittlungsvorrichtung (12) dazu ausgelegt ist, die Summe der für alle Sendestationen (2-1, 2-2, ..., 2-n) ermittelten Datenmengen mit einem für die Vermittlungsstation (1) festgelegten Gesamt-Grenzwert zu vergleichen.

7. Vorrichtung nach einem der vorhergehenden Ansprüche,
**dadurch gekennzeichnet,**
**daß** die Ermittlungsvorrichtung (12) dazu ausgelegt ist, die von der Vermittlungsstation (1) pro Zeiteinheit von allen Sendestationen (2-1, 2-2, ..., 2-n) insgesamt übernommene und/oder zu übernehmende Gesamt-Datenmenge zu ermitteln.

8. Vorrichtung nach Anspruch 7,
**dadurch gekennzeichnet,**
**daß** die Ermittlungsvorrichtung (12) dazu ausgelegt ist, die ermittelte Gesamt-Datenmenge mit einem für die Vermittlungsstation (1) festgelegten Gesamt-Grenzwert zu vergleichen..

9. Vorrichtung nach einem oder mehreren der Ansprüche 5, 6 und 8,
**dadurch gekennzeichnet,**
**daß** die Ermittlungsvorrichtung (12) dazu ausgelegt ist, die Unterbrechungsvorrichtung (11, 12) zur Unterbrechung der Datenübernahme veranlaßt, wenn bei den Vergleichen gemäß Anspruch 5 und/oder Anspruch 6 und/oder Anspruch 8 ein Überschreiten des jeweiligen Grenzwertes ermittelt wird.

10. Vorrichtung nach einem der vorhergehenden Ansprüche,
**dadurch gekennzeichnet,**
**daß** eine Abfragevorrichtung (11) vorgesehen ist, welche dazu ausgelegt ist, unter den nicht abzukoppelnden Sendestationen (2-1, 2-2, ..., 2-n) fortlaufend Abfragen durchzuführen, um zu ermitteln, ob und gegebenenfalls wo Datenpakete zur Übernahme in die Vermittlungsstation (1) zur Verfügung stehen.

11. Verfahren zur Kommunikation zwischen Sende- und/oder Empfangsstationen und einer Vermittlungsstation (1),
- wobei die Sendestationen (2-1, 2-2, ..., 2-n) der Vermittlungsstation (1) zur Weiterleitung an Empfangsstationen vorgesehene Daten zuführen,
- wobei die Vermittlungsstation (1) die ihr zugeführten Daten übernimmt und direkt oder indirekt an die jeweils gewünschte Empfangsstation weiterleitet, und
wobei eine pro Zeiteinheit in die Vermittlungsstation (1) übernommenen und/oder zu übernehmende Datenmenge ermittelt wird, und die Übernahme von Daten von einer oder mehreren Sendestationen (2-1, 2-2, ..., 2-n) in die Vermittlungsstation (1) in Abhängigkeit vom Ermittlungsergebnis selektiv unterbrechbar ist,
**dadurch gekennzeichnet,**
- **daß** die Sendestationen (2-1, 2-2, ..., 2-n) zyklisch oder in einer beliebigen anderen Reihenfolge abgefragt und bei Bedarf zur Ausgabe von durch die Vermittlungsstation (1) zu vermittelnden Daten veranlaßt werden, und
- **daß** dann, wenn die von einer, mehreren oder allen Sendestationen (2-1, 2-2, ..., 2-n) pro Zeiteinheit ausgegebene Datenmenge einen bestimmten Grenzwert überschreitet, eine oder mehrere Sendestationen (2-1, 2-2, ..., 2-n) bei der Abfrage unberücksichtigt gelassen werden.

12. Verfahren nach Anspruch 11,
**dadurch gekennzeichnet,**
**daß** die Kommunikation in einer asynchronen Datenpaketversendung von den Sendestationen (2-1, 2-2, ..., 2-n) zur Vermittlungsstation (1) besteht.

13. Verfahren nach Anspruch 11 oder 12,
**dadurch gekennzeichnet,**
**daß** in der Vermittlungsstation (1) ein ATM-Vermittlungsverfahren durchgerührt wird.

14. Verfahren nach einem der Ansprüche 11 bis 13,
**dadurch gekennzeichnet,**
**daß** die von jeder Sendestation (2-1, 2-2, ..., 2-n) pro Zeiteinheit übernommene und/oder zu übernehmende Datenmenge separat ermittelt wird.

15. Verfahren nach Anspruch 14,
**dadurch gekennzeichnet,**
**daß** die ermittelten Datenmengen jeweils mit einem für die betreffende Sendestation (2-1, 2-2, ..., 2-n) festgelegten Grenzwert verglichen werden.

16. Verfahren nach Anspruch 14 oder 15,
**dadurch gekennzeichnet,**
**daß** die Summe der für alle Sendestationen (2-1, 2-2, ..., 2-n) ermittelten Datenmengen mit einem für die Vermittlungsstation (1) festgelegten Gesamt-Grenzwert verglichen wird.

17. Verfahren nach einem der Ansprüche 11 bis 16,
**dadurch gekennzeichnet,**
**daß** die von der Vermittlungsstation (1) pro Zeiteinheit von allen Sendestationen (2-1, 2-2, ..., 2-n) insgesamt übernommene und/oder zu übernehmende Gesamt-Datenmenge ermittelt wird.

18. Verfahren nach Anspruch 17,
**dadurch gekennzeichnet,**
**daß** ermittelte Gesamt-Datenmenge mit einem für die Vermittlungsstation (1) festgelegten Gesamt-Grenzwert verglichen wird.

19. Verfahren nach einem oder mehreren der Ansprüche 15, 16 und 18,
**dadurch gekennzeichnet,**
**daß** die Unterbrechung der Datenübernahme veranlaßt wird, wenn bei den Vergleichen gemäß Anspruch 15 und/oder Anspruch 16 und/oder Anspruch 18 ein Überschreiten des jeweiligen Grenzwertes ermittelt wird.

20. Verfahren nach einem der Ansprüche 11 bis 19,
**dadurch gekennzeichnet,**
**daß** unter den nicht abzukoppelnden Sendestationen (2-1, 2-2, ..., 2-n) fortlaufend Abfragen durchgeführt werden, um zu ermitteln, ob und gegebenenfalls wo Datenpakete zur Übernahme in die Vermittlungsstation (1) zur Verfügung stehen.

## Claims

1. Device for communication between transmitting and/or receiving stations and a switching station (1)
- wherein the transmitting stations (2-1, 2-2, ..., 2-n) supply data intended for forwarding to receiving stations to the switching station (1),
- wherein the switching station (1) accepts the data supplied to it and forwards them directly or indirectly to the in each case desired receiving station, and
- wherein the switching station (1) contains
- a determining device (12) by means of which a quantity of data accepted and/or to be accepted into the switching station (1) per unit time can be determined and
- an interrupting device (11, 12) by means of which the transfer of data from one or more transmitting stations (2-1, 2-2, ..., 2-n) into the switching station (1) can be selectively interrupted in dependence on the result of the determination,
**characterized in that** the interrupting device (11, 12) contains a polling device (11),
- which cyclically, or in any other order, polls the transmitting stations (2-1, 2-2, ..., 2-n) and, if required, causes them to output data to be switched by the switching station (1), and
- which, if the quantity of data output by one, a number of or all transmitting stations (2-1, 2-2, ..., 2-n) per unit time exceeds a particular limit value, leaves one or more transmitting stations (2-1, 2-2, ..., 2-n) unconsidered in the polling.

2. Device according to Claim 1, **characterized in that** the communication consists in an asynchronous forwarding of data packets from the transmitting stations (2-1, 2-2, ..., 2-n) to the switching station (1).

3. Device according to Claim 1 or 2, **characterized in that** the switching station (1) is designed for carrying out an ATM switching method.

4. Device according to one of the preceding claims, **characterized in that** the determining device (12) has a multiplicity of sub-determining devices (12-1, 12-2, ..., 12-n), each of which is allocated to one transmitting station (2-1, 2-2, ..., 2-n) and which in each case separately determine the quantity of data accepted and/or to be accepted by the associated transmitting station per unit time.

5. Device according to Claim 4, **characterized in that** the determining device (12) is designed for in each case comparing the quantities of data determined with a limit value specified for the relevant transmitting station (2-1, 2-2, ..., 2-n).

6. Device according to Claim 4 or 5, **characterized in that** the determining device (12) is designed for comparing the sum of the quantities of data determined for all transmitting stations (2-1, 2-2, ..., 2-n) with a total limit value specified for the switching station (1).

7. Device according to one of the preceding claims, **characterized in that** the determining device (12) is designed for determining the total quantity of data accepted and/or to be accepted overall from all transmitting stations (2-1, 2-2, ..., 2-n) per unit time by the switching station (1).

8. Device according to Claim 7, **characterized in that** the determining device (12) is designed for comparing the total quantity of data determined with a total limit value specified for the switching station (1).

9. Device according to one or more of Claims 5, 6 and 8, **characterized in that** the determining device (12) is designed for causing the interrupting device (11, 12) to interrupt the data transfer if a transgression of the respective limit value is determined during the comparing according to Claim 5 and/or Claim 6 and/or Claim 8.

10. Device according to one of the preceding claims, **characterized in that** a polling device (11) is provided which is designed for continuously carrying out polls among the transmitting stations (2-1, 2-2, ..., 2-n) not to be decoupled in order to determine whether and, if necessary, where data packets are available for transfer into the switching station (1).

11. Method for communication between transmitting and/or receiving stations and a switching station (1),
- wherein the transmitting stations (2-1, 2-2, ..., 2-n) supply data intended for forwarding to receiving stations to the switching station (1),
- wherein the switching station (1) accepts the data supplied to it and forwards them directly or indirectly to the in each case desired receiving station, and wherein a quantity of data accepted and/or to be accepted into the switching station (1) per unit time is determined and the transfer of data from one or more transmitting stations (2-1, 2-2, ..., 2-n) into the switching station (1) can be selectively interrupted in dependence on the result of the determination,
**characterized in that**
- the transmitting stations (2-1, 2-2, ..., 2-n) are cyclically, or in another order, polled and, if necessary, caused to output data to be switched by the switching station (1),
- if the quantity of data output by one, a number of or all transmitting stations (2-1, 2-2, ..., 2-n) per unit time exceeds a particular limit value, one or more transmitting stations (2-1, 2-2, ..., 2-n) are left unconsidered in the polling.

12. Method according to Claim 11, **characterized in that** the communication consists in an asynchronous transmission of data packets from the transmitting stations ((2-1, 2-2, ..., 2-n) to the switching station (1).

13. Method according to Claim 11 or 12, **characterized in that** an ATM switching method is carried out in the switching station (1).

14. Method according to one of Claims 11 to 13, **characterized in that** the quantity of data accepted and/or to be accepted per unit time by each transmitting station (2-1, 2-2, ..., 2-n) is determined separately.

15. Method according to Claim 14, **characterized in that** the quantities of data determined are in each case compared with a limit value specified for the relevant transmitting station (2-1, 2-2, ..., 2-n).

16. Method according to Claim 14 or 15, **characterized in that** the sum of the quantities of data determined for all transmitting stations (2-1, 2-2, ..., 2-n) is compared with a total limit value specified for the switching station (1).

17. Method according to one of Claims 11 to 16, **characterized in that** the total quantity of data accepted and/or to be accepted overall from all transmitting stations (2-1, 2-2, ..., 2-n) per unit time by the switching station (1) is determined.

18. Method according to Claim 17, **characterized in that** the total quantity of data determined is compared with a total limit value specified for the switching station (1).

19. Method according to one or more of Claims 15, 16 and 18, **characterized in that** the interruption of the data transfer is induced if a transgression of the respective limit value is determined during the comparing according to Claim 15 and/or Claim 16 and/or Claim 18.

20. Method according to one of Claims 11 to 19, **characterized in that** polls are continuously carried out among the transmitting stations (2-1, 2-2, ..., 2-n) not to be decoupled in order to determine whether and, if necessary, where data packets are available for transfer into the switching station (1).

## Revendications

1. Dispositif de communication entre des postes émetteurs/et ou récepteurs et un central de commutation (1),
- les postes émetteurs (2-1, 2-2, ..., 2-n) acheminant vers le central de commutation (1) des données prévues pour être retransmises à despostes récepteurs,
- le central de commutation (1) prenant en charge les données qui lui ont été acheminées et les retransmettant directement ou indirectement vers le poste récepteur souhaité, et
- le central de commutation (1) comprenant
- un dispositif de détermination (12), permettant de déterminer une quantité de données prise en charge et/ou devant être prise en charge par unité de temps dans le central de commutation (1),
- un dispositif d'interruption (11, 12), permettant d'interrompre de façon sélective, en fonction du résultat de la détermination la prise en charge dans le central de commutation (1) de données provenant d'un ou de plusieurs postes émetteurs (2-1, 2-2, ..., 2-n),
**caractérisé en ce que** le dispositif d'interruption (11, 12) comprend un dispositif d'interrogation (11),
- interrogeant cycliquement ou selon une autre séquence quelconque les postes émetteurs (2-1, 2-2, ..., 2-n) et les incitant en cas de besoin à émettre des données devant être transférées par le central de commutation (1), et
- laissant inconsidérés lors de l'interrogation un ou plusieurs postes émetteurs (2-1, 2-2, ..., 2-n), si la quantité de données émise par unité de temps par un, par plusieurs ou par tous les postes émetteurs (2-1, 2-2, ..., 2-n) dépasse une valeur limite définie.

2. Dispositif selon la revendication 1,
**caractérisé en ce que**
la communication consiste en un envoi asynchrone de paquets de données des postes émetteurs (2-1, 2-2, ..., 2-n) vers le central de commutation (1).

3. Dispositif selon la revendication 1 ou 2,
**caractérisé en ce que**
le central de commutation (1) est conçu pour la réalisation d'un procédé de commutation ATM.

4. Dispositif selon l'une quelconque des revendications précédentes,
**caractérisé en ce que**
le dispositif de détermination (12) comporte une pluralité de sous-dispositifs de détermination (12-1, 12-2, ..., 12-n) dont chacun est associé à un poste émetteur (2-1, 2-2, ..., 2-n) et qui détermine chaque fois séparément la quantité de données prise en charge et/ou devant être prise en charge par unité de temps à partir du poste émetteur associé.

5. Dispositif selon la revendication 4,
**caractérisé en ce que**
le dispositif de détermination (12) est conçu pour comparer chaque fois les quantités de données déterminées avec une valeur limite fixée pour le poste émetteur concerné (2-1, 2-2, ..., 2-n).

6. Dispositif selon la revendication 4 ou 5,
**caractérisé en ce que**
le dispositif de détermination (12) est conçu pour comparer la somme des quantités de données déterminées pour tous les postes émetteurs (2-1, 2-2, ..., 2-n) avec une valeur limite totale fixée pour le central de commutation (1).

7. Dispositif selon l'une quelconque des revendications précédentes,
**caractérisé en ce que**
le dispositif de détermination (12) est conçu pour déterminer la quantité totale de données prise en charge et/ou devant être prise en charge globalement par unité de temps par le central de commutation (1) à partir de tous les postes émetteurs (2-1, 2-2, ..., 2-n).

8. Dispositif selon la revendication 7,
**caractérisé en ce que**
le dispositif de détermination (12) est conçu pour comparer la quantité totale de données déterminée avec une valeur limite totale fixée pour le central de commutation (1).

9. Dispositif selon l'une ou plusieurs des revendication 5, 6 et 8,
**caractérisé en ce que**
le dispositif de détermination (12) est conçu pour inciter le dispositif d'interruption (11, 12) à interrompre la prise en charge de données, si lors de la comparaison selon la revendication 5 et/ou la revendication 6 et/ou la revendication 8, un dépassement de la valeur limite concernée est déterminé.

10. Dispositif selon l'une quelconque des revendications précédentes,
**caractérisé en ce**
**qu'**il est prévu un dispositif d'interrogation (11) qui est conçu pour procéder à des interrogations continues parmi les postes émetteurs (21, 2-2, ..., 2-n) qui ne doivent pas être découplés, pour déterminer si et le cas échéant à quel endroit des paquets de données sont disponibles pour être pris en charge dans le central de commutation (1).

11. Procédé de communication entre des postes émetteurs/et ou récepteurs et un central de commutation (1),
- les postes émetteurs (21, 2-2, ..., 2-n) acheminant vers le central de commutation (1) des données prévues pour être retransmises à des postes récepteurs,
- le central de commutation (1) prenant en charge les données qui lui sont acheminées et les retransmettant directement ou indirectement au poste récepteur respectif souhaité, et
- une quantité de données prise en charge et/ou devant être prise en charge par unité de temps dans le central de commutation (1) étant déterminée et la prise en charge de données à partir d'un ou par plusieurs postes émetteurs (2-1, 2-2, ..., 2-n) dans le central de commutation (1) étant susceptible d'être interrompue de façon sélective, en fonction du résultat de la détermination,
**caractérisé en ce que**,
- les postes émetteurs(2 -1, 2-2, ..., 2-n) sont interrogés cycliquement ou selon une autre séquence quelconque et en cas de besoin, sont incités à émettre des données devant être transférées par le central de commutation (1) et
- **en ce que**, lorsque la quantité de données émise par unité de temps par un, par plusieurs ou par tous les postes émetteurs (2-1, 2-2, ..., 2-n) dépasse une valeur limite définie, un, plusieurs ou tous les postes émetteurs (2-1, 2-2, ..., 2-n) restent inconsidérés lors de l'interrogation.

12. Procédé selon la revendication 11,
**caractérisé en ce que**
la communication consiste en un envoi asynchrone de paquets de données des postes émetteurs (2-1, 2-2, ..., 2-n) vers le central de commutation (1).

13. Procédé selon la revendication 11 ou 12,
**caractérisé en ce**
**qu'**un procédé de commutation ATM est réalisé dans le central de commutation (1).

14. Procédé selon l'une quelconque des revendications 11 à 13,
**caractérisé en ce que**
la quantité de données prise en charge et/ou devant être prise en charge par unité de temps par chaque poste émetteur (2-1, 2-2, ..., 2-n) est déterminée séparément.

15. Procédé selon la revendication 14,
**caractérisé en ce que**
les quantités de données déterminées sont chaque fois comparées avec une valeur limite fixée pour le poste émetteur concerné (2-1, 2-2, ..., 2-n).

16. Procédé selon la revendication 14 ou 15,
**caractérisé en ce que**
la somme des quantités de données déterminées pour tous les postes émetteurs (2-1, 2-2, ..., 2-n) est comparée avec une valeur limite totale fixée pour le central de commutation (1).

17. Procédé selon l'une quelconque des revendications 11 à 16,
**caractérisé en ce que**
la quantité totale de données prise en charge et/ou devant être prise en charge globalement par unité de temps par le central de commutation (1) à partir de tous les postes émetteurs (2-2, 2-n, ..., ) est déterminée.

18. Procédé selon la revendication 17,
**caractérisé en ce que**
la quantité totale de données déterminée est comparée-avec une valeur limite totale fixée pour le central de commutation (1).

19. Procédé selon l'une ou plusieurs des revendications 15, 16 et 18,
**caractérisé en ce que**
l'interruption de la prise en charge des données est initiée, si lors des comparaisons selon la revendication 15 et/ou la revendication 16 et/ou la revendication 18, un dépassement de la valeur limite concernée est déterminé.

20. Procédé selon l'une quelconque des revendications 11 à 19,
**caractérisé en ce**
**qu'**il est procédé à des interrogations continues parmi les postes émetteurs (2-1, 2-2, ..., 2-n) qui ne doivent pas être découplés, pour déterminer si et le cas échéant à quel endroit des paquets de données sont disponibles pour être pris en charge dans le central de commutation (1).
